Europäisches Patentamt

European Patent Office

Office européen des brevets

(11) Veröffentlichungsnummer: **0 065 240**
**A1**

# (12) EUROPÄISCHE PATENTANMELDUNG

(21) Anmeldenummer: 82103970.8

(22) Anmeldetag: 07.05.82

(51) Int. Cl.³: **A 01 G 9/22**

(30) Priorität: 12.05.81 FR 8109436
26.01.82 FR 8201200

(43) Veröffentlichungstag der Anmeldung: 24.11.82
**Patentblatt 82/47**

(84) Benannte Vertragsstaaten: **BE CH DE GB LI NL**

(71) Anmelder: **MINIGRIP EUROPE GMBH, Heilbronner Strasse 43, D-7000 Stuttgart 1 (DE)**

(72) Erfinder: **Hugues, Gilbert, Paul, Jean-Marie, 1, Rue de Marnes, F-92410 Ville d'avray (FR)**
Erfinder: **Heyka, Norbert, 1, Rue Basse, F-60390 Auneuil (FR)**

(74) Vertreter: **Hoeger, Stellrecht & Partner, Uhlandstrasse 14c, D-7000 Stuttgart 1 (DE)**

(54) Aufblasbares Trennwandelement.

(57) Aufblasbares Trennwandelement mit mindestens einem Schlauch aus einer flexiblen Kunststoff-Folie und mit mindestens einem Verbindungsteil zum Herstellen einer Verbindung zwischen dem Schlauch und einer Aufhängung und/oder einem weiteren derartigen Schlauch, wobei jeder Schlauch (1, 1') durch eine flache, auf sich selbst zurückgefaltete Folienbahn mit in ihrer Längsrichtung und längs einer Mantellinie des Schlauchs (1, 1') verlaufenden, zueinander komplementären und dichtend ineinander greifenden Verschlussprofilen (2, 2'; 3, 3') gebildet ist und wobei der Verbindungsteil als Lasche (4, 5) in Form eines über mindestens eines der Verschlussprofile (2, 2'; 3, 3') hinausgehenden Folienstreifens der Folienbahn ausgebildet ist. Besonders vorteilhaft sind erfindungsgemässe Trennwand-Doppelelemente mit zwei Schläuchen, die über einen Verbindungsteil miteinander verbunden sind, wobei sämtliche Teile des Doppelelements Bestandteile eines einstückig extrudierten Kunststoffschlauchs sind.

Beschreibung

Aufblasbares Trennwandelement

Die Erfindung betrifft ein aufblasbares Trennwandelement mit mindestens einem Schlauch aus einer flexiblen Kunststoff-Folie und mit mindestens einem Verbindungsteil zum Herstellen einer Verbindung zwischen dem Schlauch und einer Aufhängung und/oder einem weiteren derartigen Schlauch.

Ein derartiges Trennwandelement ist aus der DE-OS 22 23 158 bekannt. Das bekannte Trennwandelement besteht aus extrudierten, transparenten Kunststoffschläuchen, mit denen Verbindungsteile verklebt bzw. Verschweißt sind, wobei diese Verbindungsteile an ihren freien Enden zueinander komplementäre Profilelemente zur Bildung eines Gleitverschlusses aufweisen können. Gemäß einer anderen Ausgestaltung dienen die Verbindungsteile zum Verbinden der Schläuche mit einer Aufhängung, welche ihrerseits die einzelnen Trennwandteile zu einer durchgehenden Trennwand verbindet, die insbesondere als Dach eines Gewächshauses gedacht ist, welches bei prall aufgeblasenen Schläuchen geschlossen ist und bei luftleeren Schläuchen eine luft- und wasserdurchlässige Lamellenstruktur bildet.

Vorteilhaft an den vorstehend beschriebenen, bekannten
Trennwandelementen bzw. den daraus hergestellten Trennwänden ist es, daß sie beispielsweise für Gewächshäuser
eine konstruktiv einfache und mit einfachen Mitteln zu
öffnende und zu schließende Dachkonstruktion bilden können. Dabei ist es jedoch andererseits nachteilig, daß
besondere Fertigungsschritte erforderlich sind, um die
Verbindungselemente herzustellen und mit den getrennt
hergestellten Kunststoffschläuchen zu verbinden, wobei
sich besondere Schwierigkeiten aufgrund der Tatsache ergeben, daß die dünnen Kunststoffschläuche beim Herstellen der Verbindung mit dem Verbindungsteil einerseits
straff gespannt sein müssen und andererseits nicht gedehnt werden dürfen, und daß überdies die Verbindung
exakt längs einer Mantellinie erfolgen sollte. Wenn
die Verbindung als eine an sich vorteilhafte und sichere Schweißverbindung hergestellt werden soll, dann
ergibt sich dabei zusätzlich das Problem, ein gegenseitiges Verschweißen von Innenwandbereichen der
Schläuche mit Sicherheit zu verhindern. Diese Probleme werden bei einer aus der FR-A-2 403 428 bekannten
Konstruktion weitgehend vermieden, da dort die einzelnen aufblasbaren Schläuche nur mit der Tragvorrichtung in Form eines Druckluftsystems verbunden sind.
Dafür ergibt sich aber ein entsprechender Aufwand der
Tragkonstruktion, die für jeden der aufblasbaren Schläuche mit mindestens einem Anschlußstutzen zum Zu- und
Abführen der Druckluft versehen werden  muß.

Ähnliche Probleme ergeben sich auch bei einer aus der
EP-A-0 021 892 bekannten Wandkonstruktion, wo ein
flexibler Kunststoffschlauch zick-zack-förmig über

0065240

Spannhaken einer Tragkonstruktion gezogen wird, wobei
der Luftdurchtritt im Bereich der Spannhaken relativ
stark behindert wird, so daß die Lauft aus dem Schlauch
bzw. den einzelnen Schlauchstücken zum Öffnen der Wandkonstruktion zwangsweise abgepumpt werden muß, was relativ schnell zu Problemen führt, wenn sich die Innenwandflächen eines Schlauchstücks aufgrund des erzeugten
Unterdruckes dichtend aneinander legen.

Ausgehend vom Stand der Technik und der vorstehend
aufgezeigten Problematik liegt der Erfindung die Aufgabe zugrunde, ein verbessertes, aufblasbares Trennwandelement anzugeben, welches sehr wirtschaftlich herstellbar ist und an einer einfachen Tragkonstruktion
aufgehängt werden kann.

Diese Aufgabe wird durch ein aufblasbares Trennwandelement der eingangs beschriebenen Art gelöst, welches gemäß der Erfindung dadurch gekennzeichnet ist,
daß der Schlauch durch eine flache, auf sich selbst
zurückgefaltete Folienbahn mit in ihrer Längsrichtung
und längs einer Mantellinie des Schlauchs verlaufenden,
zueinander komplementären und dichtend ineinander greifenden Verschlußprofilen gebildet ist, und daß der
Verbindungsteil als Lasche in Form eines über mindestens eines der Verschlußprofile hinausgehenden Folienstreifens der Folienbahn ausgebildet ist.

Der entscheidende Vorteil des erfindungsgemäßen Trennwandelements besteht dabei darin, daß seine sämtlichen
Elemente einschließlich der Lasche einstückig in einem
Arbeitsgang hergestellt werden können, und daß an diesem einstückigen Element dann durch einfaches Verrasten
der Verschlußprofile miteinander der aufblasbare Schlauch
hergestellt werden kann. Außerdem können die Folienbahnen für die Herstellung erfindungsgemäßer Trennwandelemente leicht in großen Längen, insbesondere durch
Extrudieren, in einem zusammenhängenden Stück einschließlich der Verschlußprofile und gegebenenfalls einer Verstärkungswulst an dem mindestens einen Lappen hergestellt werden.

Die Verwendung von Verschlußprofilen, wie sie heute
bei Verschlüssen von Kunststoff-Beuteln verwendet werden,zur Bildung des Schlauchs des Trennwandelements
gewährleistet dabei eine völlig ausreichende Dichtigkeit.

Gleichzeitig wird gegenüber Schläuchen aus Flachmaterial,
die durch Verschweißen der Längskanten des Flachmaterials
hergestellt werden, eine höhere Zuverlässigkeit erzielt
und außerdem eine bessere Festigkeit gegenüber den
wechselnden Zugbelastungen beim Aufblasen des Schlauches und bei jedem Ablassen der Luft.

Was den Verstärkungswulst anbelangt, so erlaubt dieser
das bequeme Aufhängen des Schlauchs an eine Aufhängevorrichtung ohne die Gefahr, daß die Folie ausreißt,
und ermöglicht ferner ein Spannen des Schlauchs, so
daß dieser in einer weitgehend horizontalen Lage gehalten werden kann und nur geringfügig durchhängt,
ohne daß die Folie zu hohen Zugkräften ausgesetzt wird,
welche die Gefahr einer Dehnung der Folie mit sich
bringen würden.

Die Verschlußprofile können im Prinzip in beliebiger
geeigneter Weise ausgebildet sein und beispielsweise ein Profil mit einer Feder aufweisen, welches unter
Druck elastisch mit einem zur Feder komplementären Nutprofil in Eingriff gebracht werden kann.

Bei Folienbeuteln mit einem derartigen Profilverschluß
wird das Federprofil derzeit so ausgeführt, daß es einen asymmetrischen Querschnitt aufweist, da man dem
Verschluß eine größere Festigkeit gegenüber solchen
Kräften verleihen möchte, die von der Innenseite des
Beutels her ausgeübt werden, als gegenüber den Kräften,
die von außen auf den Verschluß ausgeübt werden.

Bei der erfindungsgemäßen Anwendung des Profilverschlusses kann eine derart asymmetrische Ausgestaltung
in gewissen Fällen ebenfalls nützlich sein. Vorzugsweise werden die Verschlußprofile jedoch so ausgebildet,
daß sie zu einer Mittelebene durch den von ihnen gebildeten Verschluß symmetrisch sind. Hierdurch erhält der
Verschluß gegenüber den Druckkräften im Inneren des
Schlauches dieselbe Festigkeit wie gegenüber Zugkräften, die insbesondere von der Aufhängung auf den Verschluß des Schlauches ausgeübt werden.

Als günstig hat es sich ferner erwiesen, wenn die mindestens eine Lasche eines Trennwandelementes mit der
mindestens einen Lasche eines weiteren Trennwandelementes verbunden wird, um ein Doppelelement zu erhalten, welches im Verbindungsbereich der Laschen mit
einer gemeinsamen Aufhängung verbindbar ist. In diesem Fall wird nämlich für die beiden Schläuche des
Trennwand-Doppelelementes nur eine gemeinsame Aufhängung benötigt, wodurch die Aufhängung selbst vereinfacht wird, wodurch außerdem die freie Querschnittsfläche vergrößert werden kann, die bei luftleeren Schläuchen zur Verfügung steht.

Vorteilhaft ist es ferner, wenn auf der vom Schlauch abgewandten Seite jedes der Verschlußprofile bei einem solchen Doppel-Trennwandelement jeweils eine Lasche vorgesehen ist, so daß die einander zugeordneten Laschen paarweise ein doppellagiges Verbindungsteil bilden, welches mit den Schläuchen verbunden ist. Auch in diesem Fall kann jede der Laschen mit einem Verstärkungswulst versehen sein, insbesondere derart, daß sich im Mittelteil des Verbindungsteils jeweils zwei Wulstpaare ergeben.

Besonders vorteilhaft ist es, wenn ein Trennwandelement gemäß der Erfindung, insbesondere ein Trennwand-Doppelelement gemäß der Erfindung derart hergestellt wird, daß seine Bestandteile sämtlich Elemente eines einstückig extrudierten Folienschlauches sind.

Außerdem ist es vorteilhaft, wenn die Abmessungen der Schläuche, des Verbindungsteils und gegebenenfalls eines am Verbindungsteil vorgesehenen Befestigungselementes so gewählt sind, daß sich die Schläuche im prall aufgeblasenen Zustand längs einer Mantellinie berühren. Auf diese Weise lässt sich nämlich eine geschlossene Wandfläche erhalten, wenn die einzelnen Trennwand-Doppelelemente entsprechend dicht beieinander angeordnet werden.

In Ausgestaltung der Erfindung kann es ferner vorteilhaft sein, wenn mit der mindestens einen Lasche ein Verstärkungsband  dauerhaft verbunden, insbesondere verschweißt ist, wobei das Verstärkungsband in diesem Fall mindestens einen Verstärkungswulst ersetzt.

Weiterhin hat es sich in Ausgestaltung der Erfindung
als günstig erwiesen, wenn die Laschen des doppellagigen Verbindungsteils eines Trennwand-Doppelelementes
durch mindestens eine parallel zu den Verschlußprofilen
verlaufende Schweißnaht miteinander verbunden sind, da
eine solche Schweißnaht bei einem zufälligen Aufplatzen
des Profilverschlusses verhindern kann,daß sich die
Verschlußprofile auf der ganzen Länge des Schlauches
voneinander lösen. Eine durchgehende Schweißnaht könnte
dabei bei einem Versagen des Profilverschlusses die
Funktion des Verschlusses selbst übernehmen, so daß
ein aufblasbarer Schlauch vorhanden bliebe. Die Schweißnaht könnte aber auch unterbrochen sein, so daß in diesem Fall die Druckluft in den doppellagigen Verbindungsteil strömen und auf diese Weise ebenfalls ein Aufspannen des Trennwandelements herbeiführen könnte. Dabei
ist es ein besonderer Vorteil, daß sowohl das Verstärkungsband wie auch die Schweißnaht unmittelbar beim
Extrudieren des Folienmaterials angebracht bzw. hergestellt werden können, so daß insofern kein zusätzlicher
Arbeitsschritt erforderlich ist.

Weitere Einzelheiten und Vorteile der Erfindung werden
nachstehend anhand von Zeichnungen noch näher erläutert.

Es zeigen:

0065240

Fig. 1    einen schematischen Teilquerschnitt
          durch eine bevorzugte Ausführungsform
          eines Trennwand-Doppelelementes gemäß
          der Erfindung einschließlich der zugehörigen Aufhängung;

Fig. 2    einen Querschnitt durch ein Trennwand-
          Doppelelement gemäß Fig. 1 bei nicht
          aufgeblasenen Schläuchen;

Fig. 3    eine schematische Darstellung einer
          geschlossenen Wandfläche  aus Trenn-
          wand-Doppelelementen gemäß der Erfin-
          dung mit aufgeblasenen Schläuchen;

Fig. 4    eine der Darstellung gemäß Fig. 3
          entsprechende Darstellung, jedoch für
          einen Zustand, bei dem die Schläuche
          entleert sind und

Fig. 5    einen der Fig. 2 entsprechenden Quer-
          schnitt durch eine abgewandelte Aus-
          führungsform eines Trennwand-Doppel-
          elementes gemäß der Erfindung.

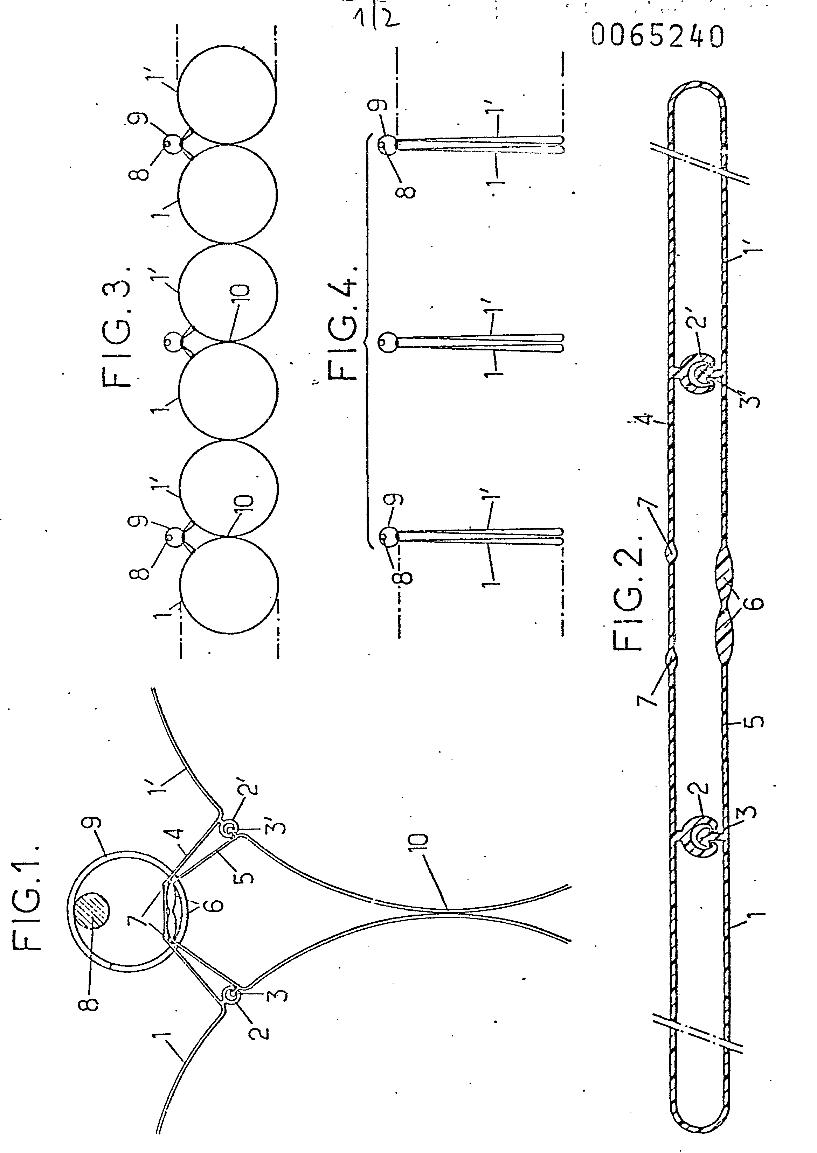

Bei dem in Fig. 1 bis 4 dargestellten Ausführungsbeispiel der Erfindung sind jeweils zwei erfindungsgemäße
Trennwand-Elemente zu einem Trennwand-Doppelelement
zusammengefasst. Dabei besteht jedes Trennwandelement
aus einem Schlauch 1 bzw. 1'. Dieser Schlauch 1, 1'
wird seinerseits durch eine auf sich selbst zurückgefaltete Folienbahn gebildet, an deren einander

0065240

zugewandten Innenseiten Verschlußprofile 2, 3 bzw. 2',
3' vorgesehen sind, welche paarweise jeweils einen
Profilverschluß bilden. Jeder dieser Profilverschlüsse besteht dabei aus einem Feder-Verschlußprofil 3,
3' und einem dazu komplementären Nut-Verschlußprofil
2, 2', welches den Kopf bzw. die Feder des jeweils
zugeordneten Feder-Verschlußprofils 3 dichtend umschließt. Derartige Verschlußprofile sind an sich bekannt und werden an Folienbeuteln verwendet, die durch
eine Zugbelastung des Verschlusses geöffnet werden
können und deren Verschlußprofile unter Druck dichtend
miteinander verrastbar sind.

Wie Fig. 2 weiter zeigt, sind die die Schläuche 1, 1'
bildenden Folienbahnen über die vom Schlauch abgewandte
Seite der Verschlußprofile 2, 2', 3, 3' hinaus verlängert und bilden Laschen 4, 5, die jeweils mit einer
Verstärkungswulst 6, 7 versehen sind. Zwischen den Verstärkungswülsten 6 und 7 sind die zu den einzelnen
Trennwandelementen  gehörigen Laschen 4, 5 einstückig
miteinander verbunden, so daß sich insgesamt ein einstückiges Trennwand-Doppelelement ergibt. Ein solches
Trennwand-Doppelelement, welches in Fig. 2 im nichtaufgeblasenen Zustand gezeigt ist, kann ausgehend von
einem einstückig extrudierten Kunststoffschlauch hergestellt werden, auf dessen Innenseite die Verschlußprofile 2, 2', 3, 3' vorgesehen sind, und dessen Wandung stellenweise durch Bildung der Verstärkungswülste
6, 7 verdickt ist. Ein solcher Kunststoff-Folienschlauch
lässt sich,wie die Fertigung von Folienbeuteln gezeigt
hat, sehr wirtschaftlich und in großen Längen herstellen und kann bequem in einzelne Trennwand-Doppelelemente unterteilt werden, wenn die Verschlußprofile miteinander verrastet werden und wenn die Schneidkanten quer zur Längsachse des Schlauches beim Durchtrennen oder in einem späteren Arbeitsgang dichtend miteinander verschweißt werden, um einen gasdichten Abschluß an den Schlauchenden zu erhalten.

Wie Fig. 1 zeigt, kann der doppellagige Verbindungsteil mit den Laschen 4, 5 und den Verstärkungswülsten 6, 7 mit seinem mittleren Teilstück in einen Ring 9 eingehängt werden, welcher die Laschen 4, 5,bezogen auf die Mittelebene der Anordnung gemäß Fig. 2, auf der Außenseite der Verstärkungswülste 6, 7 durchgreift. Dabei können in Längsrichtung der Trennwandelemente in geeignetem Abstand voneinander mehrere Ringe 9 vorgesehen sein, die dann gemeinsam auf eine zugeordnete Stange 8 oder dergleichen einer Aufhängevorrichtung aufgeschoben werden, von der sie in axialer Richtung gleitverschieblich gehalten werden, so daß Längenänderungen der Schläuche 1, 1' beim Aufblasen derselben durch eine entsprechende Verschiebung der Ringe 9 gegenüber der Stange 8 ausgeglichen werden können. Jedenfalls wird auf diese Weise eine einfache und zuverlässige Aufhängung der aufblasbaren Trennwandelemente gemäß der Erfindung erreicht, deren Schläuche in Fig. 1 und 3 prall gefüllt sind.

Wenn man die Abmessungen der Schläuche 1, 1', des Verbindungsteils mit den Laschen 4, 5 und den Verstärkungswülsten 6, 7 und des Ringes 9 so wählt, daß sich die Schläuche 1, 1' im prall aufgeblasenen Zustand

längs einer Mantellinie 1o berühren und wenn man ferner die einzelnen Trennwand-Doppelelemente im entsprechenden Abstand voneinander anordnet, dann lässt sich
gemäß Fig. 3 eine geschlossene Trennwand aus parallel
zueinander verlaufenden Schläuchen 1, 1' erhalten,
die beispielsweise als Dach für ein Gewächshaus geeignet ist. Mit diesem Dach kann man insbesondere die
von außen eingestrahlte Wärme in dem Raum unterhalb
des Daches zurückhalten. Andererseits lässt sich die
Dachfläche, wenn man die Luft aus den Schläuchen 1,
1' entweichen lässt, zum Belüften des darunter befindlichen Raums auf einen geringen Bruchteil reduzieren,
wie dies aus Fig. 4 deutlich wird.

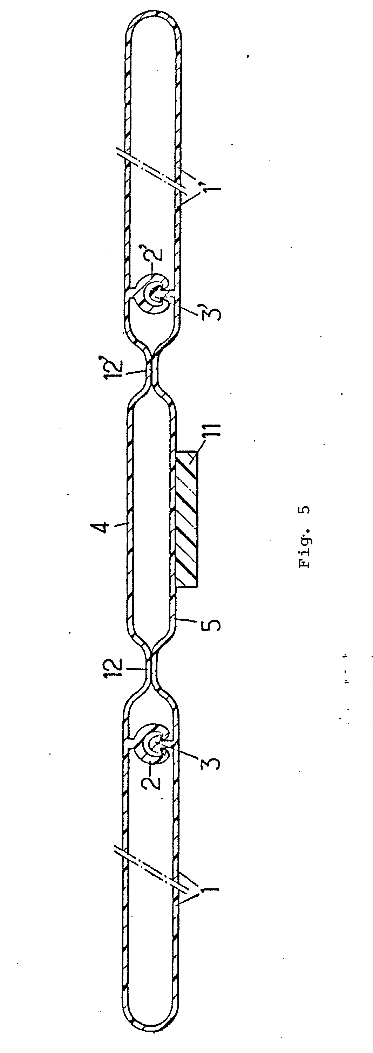

Statt der beim Extrudieren erzeugten Verstärkungswülste 6, 7, die nicht problemlos beliebig dick ausgebildet werden können, um ein Ausreißen beim Aufhängen der Trennwandelemente mit Sicherheit zu verhindern,- in diesem Zusammenhang ist zu beachten, daß
die Querschnitte durch die Verschlußprofile 2, 3, 2',
3' zur Verdeutlichung der Verschlußkonstruktion übertrieben vergrößert dargestellt sind, während es sich
bei diesen Verschlußprofilen in Wirklichkeit um Profile mit relativ kleinem Querschnitt handelt, die auch
an einem dünnen Folienschlauch problemlos angeformt
werden können - besteht in Ausgestaltung der Erfindung
die Möglichkeit, statt der Verstärkungswülste 6, 7
ein Verstärkungsband 11 vorzusehen, wie dies Fig. 5
zeigt. Ein solches Verstärkungsband, insbesondere ein
Kunststoffband, kann beim Extrudieren einer Kunststoffbahn oder eines Kunststoffschlauches sofort an dieser
bzw. diesem befestigt, insbesondere angeschweißt werden,

0065240

so daß kein zusätzlicher Arbeitsgang erforderlich ist,
und bietet dann eine sichere Verstärkung für das Ansetzen der Aufhängung, beispielsweise eines Ringes 9,
wie er in Fig. 1 gezeigt ist.

Bei dem Ausführungsbeispiel gemäß Fig. 5 sind ferner
parallel zu den Profilverschlüssen 2, 3, 2', 3' Schweißnähte 12 bzw. 12' vorgesehen, die eine zusätzliche Sicherung für die aufblasbaren Schläuche 1, 1' bilden.
Wenn nämlich eine solche Schweißnaht 12 vorhanden ist,
dann kann sie verhindern, daß ein Profilverschluß 2, 3, der
sich beispielsweise aufgrund eines Fertigungsfehlers an
einer Stelle etwas öffnet, nunmehr unter dem Einfluß
des Druckes im Inneren des Schlauches 1, 1' über die
volle Länge desselben aufreißt. Außerdem kann die
Schweißnaht 12 bzw. 12' bei Leckverlusten am Profilverschluß auf der Außenseite desselben für einen gewissen
Druckaufbau sorgen, so daß die über dem Profilverschluß
insgesamt wirksame Druckdifferenz verringert wird.
Andererseits kann die Schweißnaht 12 bzw. 12' auch unterbrochen sein, so daß bei einem Leck an einem der
Profilverschlüsse 2, 3 bzw. 2', 3' die Druckluft in den
doppelwandigen Verbindungsteil eintritt, wodurch zumindest ein weitgehend vollständiges Aufblasen des Trennwandelements gewährleistet ist, selbst wenn der eine
oder andere Profilverschluß nicht völlig dicht ist.

Als Materialien für die erfindungsgemäßen aufblasbaren
Trennwandelemente kommen die verschiedensten Kunststoffe, insbesondere Polyäthylen infrage, welches in
transparenter oder durchscheinender Form und in

- 13 -

gefärbter oder nicht gefärbter Form verwendet werden
kann, wobei eine Einfärbung,ein Bedrucken oder dergleichen gegebenenfalls auch nur bereichsweise erfolgen kann.

Patentansprüche

1. Aufblasbares Trennwandelement mit mindestens einem
   Schlauch aus einer flexiblen Kunststoff-Folie und
   mit mindestens einem Verbindungsteil zum Herstellen
   einer Verbindung zwischen dem Schlauch und einer
   Aufhängung und/oder einem weiteren derartigen Schlauch,
   d a d u r c h   g e k e n n z e i c h n e t ,
   daß der Schlauch (1, 1') durch eine flache, auf sich
   selbst zurückgefaltete Folienbahn mit in ihrer Längsrichtung und längs einer Mantellinie des Schlauchs
   (1, 1') verlaufenden, zueinander komplementären und
   dichtend ineinander greifenden Verschlußprofilen
   (2, 2'; 3, 3') gebildet ist, und daß der Verbindungsteil als Lasche (4, 5) in Form eines über mindestens
   eines der Verschlußprofile (2, 2'; 3, 3') hinausgehenden Folienstreifens der Folienbahn ausgebildet
   ist.

2. Trennwandelement nach Anspruch 1, dadurch gekennzeichnet,  daß die Lasche (4, 5) mit einem Verstärkungswulst (6, 7) zur Herstellung einer Verbindung
   zwischen dem Schlauch und einer Aufhängung versehen
   ist.

3. Trennwandelement nach Anspruch 1 oder 2, dadurch
   gekennzeichnet, daß die Verschlußprofile (2, 2';
   3, 3') symmetrisch zu einer Mittelebene durch den
   von ihnen gebildeten Verschluß ausgebildet sind.

4. Trennwandelement nach einem der Ansprüche 1 bis 3,
   dadurch gekennzeichnet, daß seine mindestens eine
   Lasche (4, 5) mit der mindestens einen Lasche (4,
   5) eines weiteren Trennwandelementes zu einem Doppelelement verbunden und im Verbindungsbereich der
   Laschen (4, 5) mit einer gemeinsamen Aufhängung
   (8, 9) verbindbar ist.

5. Trennwandelement nach Anspruch 4, dadurch gekennzeichnet, daß auf der vom Schlauch (1 , 1') abgewandten Seite jedes der Verschlußprofile (2, 2';
   3, 3') jeweils eine Lasche (4, 5) vorgesehen ist,
   und daß die einander zugeordneten Laschen (4, 5)
   zur Bildung eines doppellagigen Verbindungsteils
   einstückig miteinander verbunden sind.

6. Trennwandelement nach Anspruch 4 oder 5, dadurch
   gekennzeichnet, daß jede der miteinander verbundenen Laschen (4, 5) jeweils mit einem Verstärkungswulst (6, 7) versehen ist.

7. Trennwandelement nach einem der Ansprüche 1 bis 6,
   dadurch gekennzeichnet, daß seine Bestandteile(1
   bis 7, 1' bis 3') Elemente eines einstückig extrudierten Folienschlauches (Fig. 2) sind.

8. Trennwandelement nach einem der Ansprüche 4 bis 7,
   dadurch gekennzeichnet, daß die Abmessungen der
   Schläuche(1, 1'), des Verbindungsteils (4 bis 7)
   und gegebenenfalls eines am Verbindungsteil vorgesehenen Befestigungselementes (9) so gewählt
   sind, daß sich die Schläuche (1, 1') im prall aufgeblasenen Zustand längs einer Mantellinie(10)berühren.

9. Trennwandelement nach einem der Ansprüche 1 bis 8,
   dadurch gekennzeichnet, daß mit der mindestens
   einen Lasche (5) ein Verstärkungsband (11) dauerhaft verbunden ist.

10. Trennwandelement nach Anspruch 9, dadurch gekennzeichnet, daß das Verstärkungsband (11) mit dem
    die Lasche (5) bildenden Folienstreifen verschweißt
    ist.

11. Trennwandelement nach einem der Ansprüche 7 bis 10,
    dadurch gekennzeichnet, daß die Laschen (4, 5) des
    doppellagigen Verbindungsteils durch mindestens
    eine parallel zu den Verschlußprofilen (2, 2';
    3, 3') verlaufende Schweißnaht (12, 12') miteinander verbunden sind.

12. Trennwandelement nach Anspruch 11, dadurch gekennzeichnet, daß angrenzend an jedes der Verschluß-
    profil-Paare (2, 3; 2', 3') jeweils eine Schweißnaht (12, 12') vorgesehen ist.

13. Trennwandelement nach Anspruch 11 oder 12, dadurch
    gekennzeichnet, daß die Schweißnaht (12, 12') mit
    Unterbrechungen versehen ist.

# FIG.1.

# FIG.3.

# FIG.4.

# FIG.2.

Fig. 5

Europäisches
Patentamt

EUROPÄISCHER RECHERCHENBERICHT

0065240
Nummer der Anmeldung

EP    82 10 3970

## EINSCHLÄGIGE DOKUMENTE

| Kategorie | Kennzeichnung des Dokuments mit Angabe, soweit erforderlich, der maßgeblichen Teile | Betr. Anspruch | KLASSIFIKATION DER ANMELDUNG (Int. Cl. 3) |
|---|---|---|---|
| D,A | DE-A-2 223 158   (BETEILIGUNGS AG) | | A 01 G    9/22 |
| D,A | FR-A-2 403 428   (SCHMITT) | | |
| D,A | EP-A-0 021 892   (MULOT) | | |

RECHERCHIERTE
SACHGEBIETE (Int. Cl. 3)

A 01 G
E 04 H
E 06 B

Der vorliegende Recherchenbericht wurde für alle Patentansprüche erstellt.

| Recherchenort DEN HAAG | Abschlußdatum der Recherche 24-08-1982 | Prüfer CAVALERI S.P. |
|---|---|---|